# EUROPÄISCHE PATENTSCHRIFT

(11) **EP 0 916 554 B1**
(45) Veröffentlichungstag und Bekanntmachung des Hinweises auf die Patenterteilung: **14.08.2002**
(21) Anmeldenummer: 98120908.3
(22) Anmeldetag: 04.11.1998
(51) Int. Cl.: B60R 21/20

(54) **Rückhaltesystem für Fahrzeuginsassen**
Restraining system for vehicle passengers
Système de retenue pour passagers de véhicule

(30) Priorität: 14.11.1997 DE 19750443
(43) Veröffentlichungstag der Anmeldung: 19.05.1999
(73) Patentinhaber: ADAM OPEL AG, 65423 Rüsselsheim (DE)
(72) Erfinder: Rick, Ulrich, Dipl.-Ing., 55595 Roxheim (DE)
(74) Vertreter: Kümpfel, Heinz, Dipl.-Ing.

(56) Entgegenhaltungen:
- EP-A- 0 367 324
- EP-A- 0 404 302
- DE-A- 4 038 910
- DE-A- 4 233 751
- DE-A- 4 338 666
- US-A- 5 503 425

## Beschreibung

Die Erfindung betrifft ein Rückhaltesystem gemäß dem 0-berbegriff des Patentanspruches 1.

Ein solches Rückhaltesystem ist mit DE 42 33 751 C2 beschrieben. Bei diesem Rückhaltesystem ist der Gassack unter Verwendung von am Rand seiner Einblasöffnung befestigten Profilleisten mit dem Gehäuse verbunden, in dem die Profilleisten an den Längsrändern der Einblasöffnung in komplementäre Gegenprofile an den Längsrändern der Öffnung des Gehäuses formschlüssig eingesetzt sind.

Die Anbringung von Profilleisten an den Rändern des Gassackes ist relativ aufwendig. Auch das Einsetzen der Profilleisten in die komplementären Gegenprofile ist ein relativ aufwendiger Montageprozeß. Eine solche Verbindung ist nur in kontinuierlich verlaufenden Nahtlinien möglich. An Ecken eines Gehäuses muß sie unterbrochen werden. Dadurch geht beim Aufblasen des Gassackes ein Teil des generierten Treibgases verloren.

Aus der EP 0 873 915 A2 ist ein weiteres Rückhaltesystem der genannten Art bekannt, bei dem der Gassack stoffschlüssig mit dem Rand der Öffnung des Gehäuses verbunden ist. Eine solche stoffschlüssige Verbindung kann durch ein Schweiß- oder Klebeverfahren hergestellt werden, wobei der zum Verbinden mit dem Gehäuse vorgesehene Rand des Gassackes nur aus einer Lage besteht.

Der Erfindung liegt die Aufgabe zugrunde, ein Rückhaltesystem für Fahrzeuginsassen der gattungsgemäßen Art so weiterzubilden, daß die Montagearbeit vereinfacht wird, die Verbindung zwischen Gassack und Gehäuse im Auslösefall des Rückhaltesystems gleichmäßig belastet wird und Gasverluste vermieden werden.

Die Erfindung löst diese Aufgabe mit den Merkmalen des Anspruches 1. Vorteilhafte Weiterbildungen der Erfindung sind Gegenstand der Unteransprüche.

Die erfindungsgemäße Lösung der Aufgabe geht von der Erkenntnis aus, daß ein gattungsgemäßes Rückhaltesystem nach einem einmaligen Aktivierungsvorgang ersetzt werden muß, da im allgemeinen sowohl durch den auslösenden Unfall, aber auch durch die beim Aufblasen des Gassackes auftretenden Kräfte die Peripherie so zerstört bzw. belastet wird, daß ein zweiter Einsatzfall mit den gleichen Teilen nicht realisierbar ist. Durch die Verwendung z. B. eines Airbaggehäuses aus spritzgußfähigem Kunststoff, wie dies mit DE 43 38 666 vorgeschlagen ist und einem Material für den Gassack, welches im wesentlichen aus einem schweißbarem Werkstoff besteht und wie es z. B. mit DE 40 38 910 beschrieben ist, kann der Gassack mit dem Rand seiner Einblasöffnung unlösbar am Rand der Öffnung des Gehäuses durch Schweißen verbunden werden. Als Schweißverfahren bieten sich dafür die an sich bekannten Verfahren wie Hochfrequenzschweißen, Ultraschallschweißen, Wärmekontaktschweißen, Wärmeimpulsschweißen oder auch Kombinationen solcher Schweißverfahren an. Dadurch wird eine werkstoffgerechte Linienverbindung erreicht, welche den hohen Belastungsanforderungen eines sich entfaltenden Airbags gerecht wird. Spannungsspitzen, wie dies bei einer punktuellen Anbindung durch Schrauben, Druckknöpfe od. dgl. unvermeidlich ist, können hier nicht auftreten.

Die Schweißverbindung kann im Gegensatz zu einer Verbindung mit im Gegenprofil einschiebbaren Profilleisten auch um Bogen und Ecken am Rand des Gehäuses geführt sein.

Erfindungsgemäß ist der Rand der Einblasöffnung des Gassackes verstärkt ausgebildet. Als Verstärkung kann ein ein- oder mehrmalig umgelegter Saum des Gassackmaterials dienen, der durch eine Schweißnaht oder auch durch eine genähte Naht in seiner Form gehalten sein kann.

Bei einem aus Metall oder einem anderen mit dem Gassack nicht schweißbaren Werkstoff bestehenden Gehäuse ist gemäß der Erfindung der Rand der Einblasöffnung des Gassakkes am Rand der Öffnung des Gehäuses mittels einer Klebenaht verbunden. Auch bei dieser unlösbaren Verbindung zwischen dem Gehäuse und dem Gassack kann der Nahtverlauf um Bogen und Ecken des Gehäuserandes geführt sein. Das erfindungsgemäße Rückhaltesystem kann somit sowohl mit einem Gehäuse mit einer runden Öffnung, - wie bei einem Fahrerairbag üblich -, als auch mit einem Gehäuse mit einer rechteckigen Öffnung, - wie bei einem Beifahrer-Airbag üblich -, ausgeführt sein.

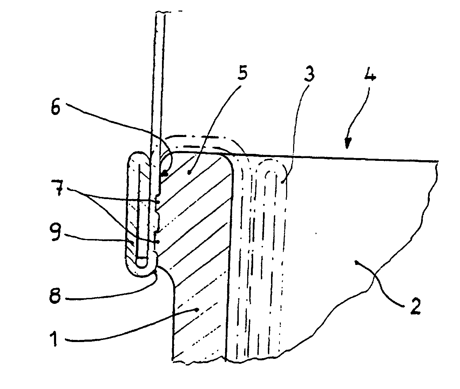

Ein Ausführungsbeispiel der Erfindung ist nachstehend anhand einer Zeichnung näher beschrieben. Die einzige Figur der Zeichnung zeigt einen Schnitt durch den Rand der Öffnung eines Gehäuses für ein erfindungsgemäßes Rückhaltesystem.

Das aus einem schweißbaren Kunststoff bestehende Gehäuse 1, welches an seinem unteren nicht dargestellten Bereich einen Gasgenerator zum Generieren von Aufblasgas und einen Diffusor zur Verteilung der Aufblasgase aufnimmt und einen Raum 2 zur Aufnahme des gefalteten Gassackes 3 aufweist, hat an seinem eine Öffnung 4 begrenzenden Rand 5 eine nach außen weisende Anlagefläche 6, die zwei umlaufende Schweißrippen 7 aufweist. An dieser Anlagefläche 6 ist ein Rand 8 einer Einblasöffnung des mit einem schweißbaren Kunststoff beschichteten Gassackes 3 durch Hochfrequenzschweißen verbunden, wobei die (in der Figur noch unverschweißt dargestellten) Schweißrippen 7 eingeschmolzen sind. Der Rand 8 ist durch zweimaliges Umschlagen und nachfolgendes Verschweißen zu einem Saum 9 verstärkt. Die sich somit ergebende linienförmige und unlösbare Verbindung zwischen dem Gehäuse 1 und dem Gassack 3 kann ohne Unterbrechung um den Rand 5 des Gehäuses 1 verlaufen. Unerwünschte Gasverluste beim Aufblasen des Gassackes 3 können somit nicht auftreten und der Gasgenerator kann damit entsprechend kleiner als bei üblichen Befestigungsarten ausgeführt werden.

Für die Befestigung des Gassackes 3 am Gehäuse 1 werden keine zusätzlichen Befestigungsmittel benötigt. Die beim Aufblasen des Gassackes 3 wirkenden Kräfte werden an der Verbindung gleichmäßig und ohne Spannungsspitzen vom Gassack 3 auf das Gehäuse 1 übertragen. Dadurch kann für den Gassack 3 ein relativ leichter Flächenwerkstoff verwendet werden, so daß damit auch die Reaktionskräfte des sich entfaltenden Gassackes 3 gering bleiben. Die Erfindung ermöglicht so ein gegenüber bekannten Bauarten kostengünstiges Rückhaltesystem.

## Patentansprüche

1. Rückhaltesystem für Fahrzeuginsassen eines Kraftfahrzeuges, mit einem bei einem Unfall durch einen Gasgenerator zu einem Auffangkissen aufblasbaren Gassack (3), welcher mit dem Rand (8) seiner Einblasöffnung an dem Rand (5) einer an die Einblasöffnung mündenden Öffnung (4) eines den Gasgenerator aufnehmenden Gehäuses (1) befestigt ist, wobei das Gehäuse (1) und der Gassack (3) im wesentlichen aus miteinander verschweißbaren oder verklebbaren Werkstoffen bestehen und der Rand (8) der Einblasöffnung des Gassackes (3) zumindest an einem Teil seines Umfanges am Rand (5) der Öffnung (4) des Gehäuses (1) durch Schweißen oder Kleben unlösbar verbunden ist, **dadurch gekennzeichnet, daß** der Rand (8) der Einblasöffnung des Gassackes (3) zumindest an Teilbereichen mit einer Verstärkung versehen ist, die durch eine Dopplung bzw. Vervielfachung des Randmaterials in Form eines Saumes (9) gebildet ist.

2. Rückhaltesystem nach Anspruch 1, **dadurch gekennzeichnet, daß** das Gehäuse (1) aus einem schweißbaren Kunststoff besteht und zumindest der Rand (8) der Einblasöffnung des Gassacks (3) aus einer mit dem Kunststoff des Gehäuses (1) schweißbaren Folie oder einem Gewebe gefertigt oder mit einer schweißbaren Beschichtung versehen ist und der Rand (8) der Einblasöffnung des Gassackes (3) am Rand (5) der Öffnung (4) des Gehäuses (1) durch Schweißen verbunden ist.

## Claims

1. Restraint system for vehicle passengers of a motor vehicle, with a gas bag (3) which can be inflated into an impact cushion by a gas generator in case of an accident and which with the edge (8) of its inflation opening is attached to the edge (5) of an opening (4) of a housing (1) which receives the gas generator, which latter opening (4) leads to the inflation opening, wherein the housing (1) and the gas bag (3) are essentially made of materials which can be welded or adhered to each other, and the edge (8) of the inflation opening of the gas bag (3) at at least a portion of its circumference is connected non-releasably by welding or adhesion to the edge (5) of the opening (4) of the housing (1), **characterised in that** the edge (8) of the inflation opening of the gas bag (3) in at least partial regions is provided with a reinforcement which is formed by doubling or multiplication of the edge material in the form of a hem (9).

2. Restraint system according to claim 1, **characterised in that** the housing (1) is made of a weldable plastic and at least the edge (8) of the inflation opening of the gas bag (3) is made from a fabric or a sheet which can be welded to the plastic of the housing (1) or is provided with a weldable coating and the edge (8) of the inflation opening of the gas bag (3) is connected by adhesion to the edge (5) of the opening (4) of the housing (1).

## Revendications

1. Dispositif de retenue pour les passagers d'un véhicule automobile comportant une poche (3) gonflable à l'aide d'un générateur de gaz pour former un coussin amortisseur en cas d'accident, laquelle poche est fixée par le bord (8) de son ouverture de gonflage au bord (5) d'une ouverture (4) débouchant dans ladite ouverture de gonflage, d'un boîtier (1) recevant le générateur de gaz, le boîtier (1) et la poche (3) étant formés de matériaux essentiellement soudables ou collables entre eux et le bord (8) de l'ouverture de gonflage de la poche (3), au moins sur une partie de son périmètre, étant fixé de manière non séparable, par soudage ou par collage, au bord (5) de l'ouverture (4) du boîtier (1), **caractérisé en ce que** le bord (8) de l'ouverture de gonflage de la poche (3), au moins dans des zones partielles, est pourvu d'un renfort obtenu par le doublage voire une multiplication des plis de matériau du bord sous la forme d'un ourlet (9).

2. Dispositif de retenue selon la revendication 1, **caractérisé en ce que** le boîtier (1) est en une matière plastique soudable et qu'au moins le bord (8) de l'ouverture de gonflage de la poche (3) est formé d'un film ou d'un tissu soudable avec la matière plastique du boîtier (1), ou est pourvu d'une enduction soudable, et **en ce que** le bord (8) de l'ouverture de gonflage de la poche (3) est liée par soudage au bord (5) de l'ouverture (4) du boîtier (1).
